# EUROPÄISCHE PATENTSCHRIFT

(11) **EP 1 036 948 B1**
(45) Veröffentlichungstag und Bekanntmachung des Hinweises auf die Patenterteilung: **11.05.2005**
(21) Anmeldenummer: 00810198.2
(22) Anmeldetag: 09.03.2000
(51) Int. Cl.: F16B 13/08

(54) **Dübel**
Dowel
Cheville

(30) Priorität: 16.03.1999 DE 29904783 U
(43) Veröffentlichungstag der Anmeldung: 20.09.2000
(73) Patentinhaber: EMS-Chemie AG, 7013 Domat/Ems (CH)
(72) Erfinder: Ponicki, Ralf, 7000 Chur (CH)
(74) Vertreter: Lauer, Joachim

(56) Entgegenhaltungen:
- EP-A- 0 591 731
- DE-A- 19 600 931
- DE-U- 1 937 138
- GB-A- 2 340 170

## Beschreibung

Die Erfindung betrifft ein Gebiet der Bautechnik, und zwar dasjenige der Vorrichtungen für die Befestigung von Bauteilen oder Gegenständen an Mauerwerk und Beton, die unter dem Fachausdruck Dübel bekannt sind.

Eine gute und detaillierte Übersicht über den Stand der Technik bei den Dübeln wird durch das Buch "Der Würth, allgemein bauaufsichtliche Zulassungen und Prüfberichte", Ausgabe 94/95, Adolf Würth GmbH & Co. KG, D-74650 Künzelsau (Deutschland) gegeben. Darin sind unter anderem auf den Seiten 228 bis 252 die allgemein bekannten Rahmendübel beschrieben, die aus einer Dübelhülse aus Polyamid und einer zugehörigen Spezialschraube bestehen, wobei die im Spreizteil gezahnte, geschlitzte und federnde Sperrzungen aufweisende Dübelhülse nach dem Setzen ins Bohrloch durch Eindrehen der Schraube gespreizt wird, was zu einem Reibschluss mit dem Mauerwerk, Stein oder Beton führt. Wegen der begrenzten Höhe des Reibschlusses sind Rahmendübel nur für leichte Lasten geeignet, wie z.B. zur Befestigung von Fassadenbekleidungen. Zudem darf die Dübelhülse nur einmal verwendet werden.

Für schwere Befestigungen in Beton gibt es einen Spezialdübel mit der Bezeichnung Wurzelanker, der im oben genannten Buch "Der Würth" auf den Seiten 12 bis 32 beschrieben ist. Der Wurzelanker besteht vollständig aus Metall (aus galvanisch verzinktem Stahl oder aus nichtrostendem Stahl) und wird reib- und formschlüssig, aber ohne Spreizdruck, kraftkontrolliert in einem zur Betonoberfläche senkrechten Bolzenbohrloch und einer Schrägbohrung für die Wurzel verankert. Der Dübel besteht aus einem Bolzen, einer Unterlagscheibe, einer Mutter und der Wurzel (einem kleineren dünneren Bolzen), die in eine schräg durch den Bolzen verlaufende Bohrung gesetzt wird. Aufgrund des Formschlusses ist die Lastgrenze dieser Dübel-Ausführung durch die Festigkeitsklasse des Betons gegeben und deshalb deutlich höher als bei Dübeln mit blossem Reibschluss durch Spreizung. Die Verwendung ist in der Zug- und Druckzone des Betons zulässig. Der Wurzelanker hat aber auch Nachteile: Erstens kann er, nachdem er einmal befestigt wurde, nur schwierig wieder demontiert werden, weil das Herausziehen der Wurzel nicht einfach ist. Ausserdem stellt die schräg durch den Bolzen verlaufende Bohrung eine fertigungstechnische Schwierigkeit dar, die eine sehr gute Führung der spanenden Werkzeuge erfordert. Weil der gesamte Dübel aus Metall besteht, ist er schliesslich relativ schwer und im Fall von nichtrostendem Stahl (für den Einsatz in Feuchträumen oder im Freien) nicht gerade billig.

Aus DE 1 937 138 U ist ein Dübel für die reib- und formschlüssige Verankerung von Bauteilen bekannt, der eine Führungsbuchse mit vier Aussparungen in der Mantelfläche, und vier in den Aussparungen beweglich angeordnete Klemmkeile umfasst, wobei die Klemmkeile derart ausgebildet sind, dass sie bei leerer Führungsbuchse nicht über deren Mantelaussenfläche hinausragen, und beim Einschrauben einer Schraube in die Führungsbuchse über die Mantelfläche hinaus ausgelenkt werden. Die Auslenkung ist dabei derart, dass der Winkel zwischen dem bei eingeschraubter Schraube hinausragenden Klemmkeil und der axialen Richtung der Führungsbuchse etwa 90° beträgt. Die DE 1 937 138 geht davon aus, dass sich die Klemmkeile ausgehend lediglich von einem vorgebohrten Loch für die Führungsbuchse in das dieses umgebende Mauerwerk oder dgl. eindrücken. Für sehr harte Werkstoffe wie insbesondere Beton dürfte der bekannte Dübel daher kaum einsetzbar sein.

Der vorliegenden Erfindung liegt die Aufgabe zugrunde, einen Dübel für die reib- und formschlüssige Verankerung von Bauteilen in einer Wand in einer Buchsenbohrung und wenigstens einer Keilbohrung, welche schräg von der Buchsenbohrung in den Wandkörper hinein abzweigend ausgebildet ist zu entwickeln, der guten Reib- und Formschluss ergibt, für die Verankerung von belasteten Bauteilen in im Bereich des Dübels homogenen Wänden, Decken oder Böden beispielsweise aus bewehrtem oder unbewehrtem Beton geeignet, lösbar und wiederverwendbar ist, und wirtschaftlich herstellbar ist.

Diese Aufgabe wird durch den Dübel gemäss Anspruch 1 gelöst. In den Unteransprüchen sind vorteilhafte Ausführungsformen der Erfindung enthalten.

Der erfindungsgemässe Dübel umfasst eine Führungsbuchse mit mindestens einer Aussparung in der Mantelfläche und wenigstens einen in der wenigstens einen Aussparung beweglich angeordneten Klemmkeil, der hinten angelenkt und derart ausgebildet ist, dass er bei leerer Führungsbuchse nicht über deren Mantelfläche hinausragt, und dass er nach Einschrauben einer Schraube in die Führungsbuchse schräg von der Anlenkung nach vorne aus der Mantelfläche hinaus ausgelenkt ist und seine Innenfläche parallel zur axialen Richtung der Führungsbuchse verläuft.

Mit dem erfindungsgemässen Dübel gelingt es in unerwarteter und überraschender Weise, die Nachteile des Standes der Technik zu eliminieren, und gleichzeitig die Anforderungen an hohe Belastbarkeit der Befestigung zu erfüllen.

Die Erfindung wird anhand von Figuren näher erläutert, die das Grundprinzip in vorteilhaften Varianten darstellen. Es zeigt
**Fig.** 1 einen erfindungsgemässen, in das Bohrloch eingeschobenen Dübel mit einer noch nicht vollständig eingedrehten Schraube,
**Fig.** 2 einen fertig montierten, erfindungsgemässen Dübel,
**Fig.** 3 einen erfindungsgemässen Klemmkeil von der Seite (**Fig.** 3a), von oben (**Fig.** 3b) und eine Detailvergrösserung (**Fig.** 3c),
**Fig.** 4 eine erfindungsgemässe Führungsbuchse in einem axialen Schnitt von der Seite betrachtet (**Fig.** 4a) und als ganzes von oben (**Fig.** 4b).

Die Bezugsnummern in den Figuren bedeuten:
- 1: Beton (Wand, Decke oder Boden)
- 2: Bauteil (zu befestigendes)
- 3: Schraube
- 4: Unterlegscheibe
- 5: Führungsbuchse
- 6: Klemmkeil
- 7: Buchsenbohrung
- 8: Keilbohrung
- 9: Aussparung in der Führungsbuchse
- 10: Vertiefung im Klemmkeil
- 11: Zähnung des Klemmkeils
- 12: Innengewinde der Führungsbuchse
- 13: Nase in der Aussparung der Führungsbuchse

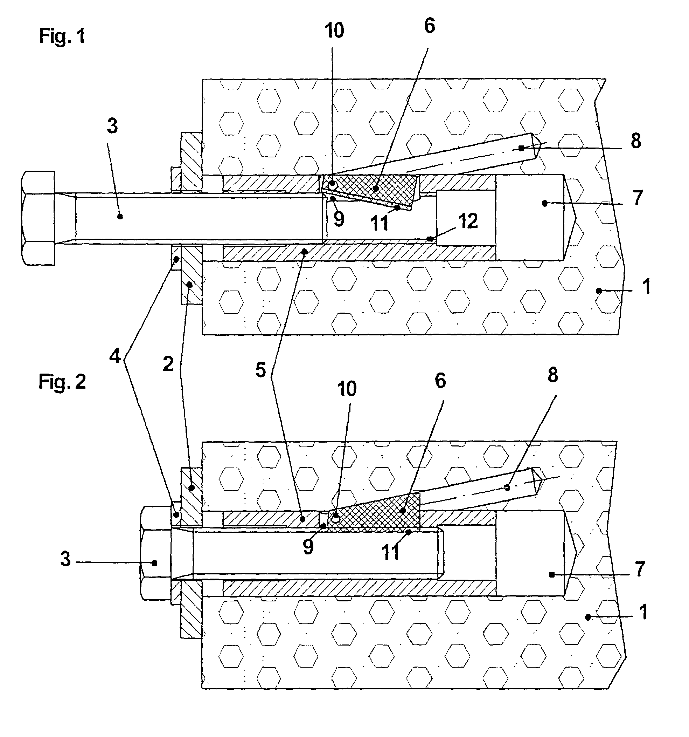

Wie in den **Fig.** 1 und **Fig.** 2 zu sehen ist, wird der Klemmkeil **6** beim Eindrehen der Schraube **3** in Richtung der schrägen Keilbohrung **8** ausgelenkt und dadurch der Dübel reib- und formschlüssig kraftkontrolliert verspreizt und verklemmt. Analog zum Wurzelanker aus dem Stand der Technik könnte man deshalb die vorliegende Erfindung auch Klemmkeilanker nennen. Die einfachste Ausführung ist ein Dübel mit einem Klemmkeil **6**. Möglich sind aber auch Ausführungen mit zwei oder noch mehr Klemmkeilen, die in den entsprechenden Aussparungen **9** gleicher Anzahl der Führungsbuchse **5** angeordnet sind.

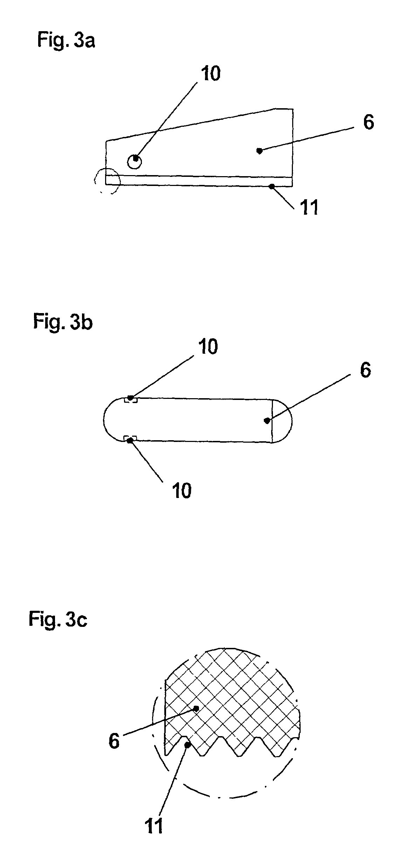

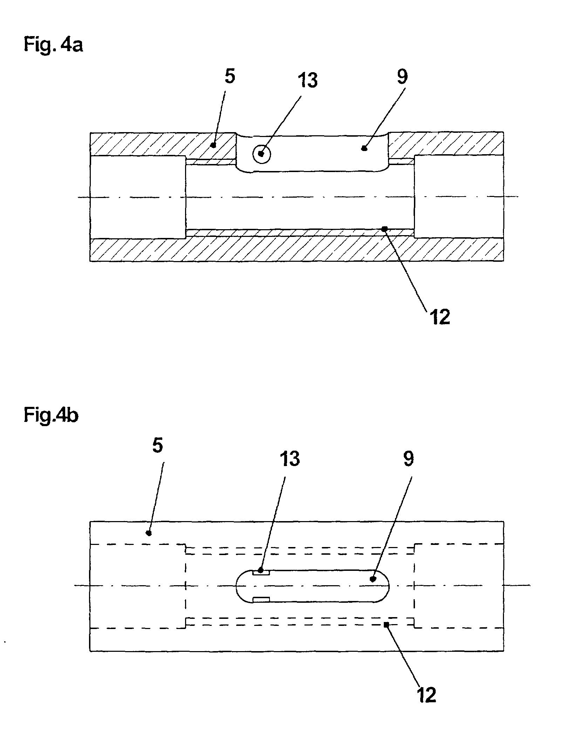

Die Aussparung **9** in der Führungsbuchse **5** ist bevorzugt länglich und von axialer Erstreckung, wie in **Fig.** 4 ersichtlich. Damit der Klemmkeil **6** unverlierbar darin eingebracht werden kann, weist die Aussparung **9** in einer vorteilhaften Ausgestaltung zwei gegenüberliegende Nasen **13** auf, zwischen welche ein Klemmkeil **6** mit entsprechenden Vertiefungen **10** eingeklickt werden kann und dort gesichert, aber beweglich ist. Diese Vertiefungen **10** sind in **Fig.** 3 eingezeichnet, wo ein weiteres, besonders vorteilhaftes Detail dargestellt ist, nämlich eine Zähnung **11** an der Innenseite des Klemmkeils **6**, so dass sich bei eingedrehter Schraube **3** ein direkter Formschluss mit Kraftübertragung zwischen der Schraube **3** und dem Klemmkeil **6** ergibt. Aussergewöhnlich ist die Eigenschaft dieser Dübel-Konstruktion, dass sie trotz der hohen Belastbarkeit leicht lösbar und wiederverwendbar ist.

Die Führungsbuchse 5 wird bevorzugt aus thermoplastischem Kunststoff hergestellt. Mit Vorteil werden dafür glasfaserverstärkte Polymere verwendet, damit die Kriechneigung unter Spannung unterbunden ist. Gut geeignete Polymere sind Polyamide oder Copolyamide mit einem Schmelzpunkt von mindestens 250 °C, wie zum Beispiel Polyamid 66 und Polyamid 46. Besonders gut geeignet für die erfindungsgemässe Anwendung bei hohen Belastungen sind aber partiell aromatische, teilkristalline Copolyamide mit einem Schmelzpunkt im Bereich von 300 bis 350 °C. Der Klemmkeil wird vorzugsweise aus Metall oder einem Kunststoff gefertigt, insbesondere eignet sich Stahl, der infolge der Einbettung in der Wand nicht einmal unbedingt rostfrei sein muss.

Für die Montage des erfindungsgemässen Dübels wird zunächst ein Bohrloch **7** (Buchsenbohrung) in den Beton **1** gebohrt. Dann wird in diese Bohrung ein Hilfswerkzeug eingeschoben und positioniert, das eine schräge Bohrung aufweist und als Bohrlehre dient, um die schräge Keilbohrung **8** geführt und am richtigen Ort in den Beton einzubringen. Der Durchmesser der Buchsenbohrung **7** ist so bemessen, dass die Führungsbuchse **5** beim Setzen in die Bohrung leicht klemmt, damit sie sich beim Eindrehen der Schraube **3** nicht dreht. Zusätzlich kann auch die Manteloberfläche der Führungsbuchse **5** entsprechend ausgeführt sein, um diesem Punkt Rechnung zu tragen. Eine besonders bevorzugte Variante zu letzterem Punkt besteht darin, den der Beton-Aussenseite bzw. dem Schraubenkopf zugewandten Rand der Führungsbuchse **5** mit mindestens einer Nase auszuführen, die einerseits an der Manteloberfläche für eine gewisse Verklemmung der eingesetzten Führungsbuchse **5** in der Buchsenbohrung **7** sorgt und andererseits an der Stirnfläche gerade die Position der Aussparung **9** bzw. des Klemmkeils **6** anzeigt.

### Beispiel

Das folgende Beispiel dient zur konkreten Illustration des Erfindungsprinzips und ist nicht einschränkend zu verstehen. Eine Führungsbuchse wurde durch Spritzguss aus Grivory® HTV-5H1 hergestellt. Dieser thermoplastische Konstruktionswerkstoff stammt von der EMS-CHEMIE AG, CH-7013 Domat/Ems (Schweiz). Es handelt sich dabei um ein mit 50 Gewichts-% Glasfasern (bezogen auf das totale Gewicht) verstärktes PA 6T/6I mit Schmelzpunkt 325 °C, also ein partiell aromatisches, teilkristallines Copolyamid aus den Monomerkomponenten Hexamethylendiamin, Terephthalsäure und Isophthalsäure. Grivory® HTV-5H1 eignet sich speziell zur Herstellung äusserst steifer, fester, wärmebeständiger, massgenauer Spritzgussteile und zeichnet sich überdies durch sehr gute Chemikalienbeständigkeit aus. Die Massetemperatur beim Spritzgiessen betrug 345 °C. Die Führungsbuchse wurde in einem einzigen Fertigungsschritt komplett mit Innengewinde auf einer Spritzgiessmaschine hergestellt, die mit einer (drehbaren) Entspindel-Einheit zur Entformung des Kerns ausgerüstet war. Diese rationelle Fertigung, bei welcher keine Nachbearbeitung notwendig ist, ist ein grosser wirtschaftlicher Vorteil der Erfindung.

Der Aussendurchmesser der Führungsbuchse betrug 20 mm, und innen war diese mit einem M12-Gewinde versehen. Zwischen die Nasen der Aussparung wurde ein Klemmkeil eingeklickt, dem beim Ausstanzen in einem Stanz/Präge-Werkzeug zugleich beidseitig entsprechende Vertiefungen eingeprägt worden waren. Es ist auch möglich, mit einer entsprechenden automatisierten Einrichtung den Klemmkeil jeweils in die Spritzgusskavität einzulegen und direkt zu umspritzen, so dass man sogar den Schritt des nachträglichen Einklickens einsparen kann.
In eine Betonwand wurde zunächst ein Loch von 20 mm Durchmesser gebohrt. Mittels einer Bohrlehre wurde dann schräg aus der Buchsenbohrung heraus in einem Winkel von 11° nach oben, welcher der Abschrägung des Klemmkeils entsprach, eine Bohrung von 6 mm Durchmesser in den Beton eingebracht. Schliesslich wurde der Dübel eingesetzt und durch Eindrehen einer M12-Schraube entsprechender Länge mit Unterlegscheibe und darunter eingelegtem Test-Bauteil kraftkontrolliert reibund formschlüssig verankert, was eine Wandbefestigung mit hoher Belastbarkeit ergab.

## Patentansprüche

1. Dübel für die reib- und formschlüssige Verankerung von Bauteilen (2) in einer im Bereich des Dübels homogenen Wand, Decke oder Boden (1), besonders aus Beton in einer Buchsenbohrung (7) und wenigstens einer Keilbohrung (8), welche schräg von der Buchsenbohrung (7) in den Wandkörper hinein abzweigend ausgebildet ist, wobei der Dübel eine Führungsbuchse (5) mit mindestens einer Aussparung (9) in der Mantelfläche, und wenigstens einen in der wenigstens einen Aussparung (9) beweglich angeordneten Klemmkeil (6) umfasst, und der Klemmkeil hinten angelenkt und derart ausgebildet ist, dass er bei leerer Führungsbuchse (5) nicht über deren Mantelfläche hinausragt, und dass er nach Einschrauben einer Schraube (3) in die Führungsbuchse (5) schräg von der Anlenkung (10, 13) nach vorne aus der Mantelfläche hinaus ausgelenkt ist, **dadurch gekennzeichnet, dass** nach Einschrauben einer Schraube die Innenfläche des Klemmkeils (6) parallel zur axialen Richtung der Führungsbuchse (5) verläuft.

2. Dübel nach Anspruch 1, **dadurch gekennzeichnet, dass** die Führungsbuchse zylindrisch ausgebildet ist, und dass sie innenseitig mit einem Innengewinde versehen ist.

3. Dübel nach Anspruch 2, **dadurch gekennzeichnet, dass** die wengistens eine Aussparung (9) länglich und sich in axialer Richtung der Führungsbuchse erstreckend ausgebildet ist und dass der Klemmkeil (6) in Richtung des Wandkörpers keilförmig erweiterend ausgebildet ist.

4. Dübel nach Anspruch 3, **dadurch gekennzeichnet, dass** der Klemmkeil (6) auf seiner der Wandoberfläche zugewandten Seite seitlich zwei gegenüberliegende Vertiefungen (10) aufweist, in welche zwei entsprechende, an der Aussparung (9) angeordnete Nasen (13) der Führungsbuchse (5) eingreifen und den Klemmkeil (6) schwenkbar lagern.

5. Dübel nach einem der Ansprüche 1 bis 4, **dadurch gekennzeichnet, dass** die Führungsbuchse (5) aus einem thermoplastischen Kunststoff, insbesondere bevorzugt einem glasfaserverstärkten Polymer besteht, und dass der Klemmkeil (6) aus Kunststoff oder Metall gefertigt ist.

6. Dübel nach Anspruch 5, **dadurch gekennzeichnet, dass** das Polymer ausgewählt ist aus der Gruppe der Polyamide und Copolyamide und einen Schmelzpunkt von mindestens 250 °C besitzt.

7. Dübel nach Anspruch 6, **dadurch gekennzeichnet, dass** es sich beim Polymer um ein partiell aromatisches, teilkristallines Copolyamid mit einem Schmelzpunkt im Bereich von 300 bis 350 °C handelt.

8. Dübel nach einem der vorhergehenden Ansprüche, **dadurch gekennzeichnet, dass** der Klemmkeil (6) an seiner der Innenseite der Führungsbuchse zugewandten Seite eine Zähnung (11) aufweist, die dem Innengewinde (12) der Führungsbuchse (5) entspricht, so dass bei eingedrehter Schraube (3) ein direkter Formschluss zwischen der Schraube (3) und dem ausgelenkten Klemmkeil (6) vorliegt.

9. Dübel nach einem der vorhergehenden Ansprüche, **dadurch gekennzeichnet, dass** die Führungsbuchse (5) an dem dem Kopf der Schraube (3) zugewandten Rand mindestens eine Nase aufweist, die im eingesetzten Zustand an der Manteloberfläche für eine Verklemmung gegen Drehung in der Buchsenbohrung (7) sorgt und an der Stirnfläche die Position der Aussparung (9) anzeigt.

## Claims

1. A dowel for the frictionally engaged and keyed anchoring of building components (2) in a wall, ceiling or floor (1), in particular of concrete and homogeneous in the area of the dowel, in a sleeved drill-hole (7) and at least one keying drill-hole (8), which is formed branching off obliquely from the sleeved drill-hole (7) into the wall body, whereby the dowel includes a guide sleeve (5) with at least one cutout (9) in the lateral surface and at least one clamping key (6) arranged in a mobile fashion in the at least one cutout (9), and the clamping key is coupled at the rear and designed in such a way that, in the presence of an empty guide sleeve (5), it does not project over its lateral surface, and that, after screwing-in of a bolt (3) into the guide sleeve (5), it is swivelled out forwards from the coupling (10, 13) out of the lateral surface, **characterised in that**, after screwing-in of a bolt, the inner surface of the clamping key (6) runs parallel to the axial direction of the guide sleeve (5).

2. The dowel according to claim 1, **characterised in that** the guide sleeve is designed cylindrical, and that it is provided on the inside with an internal thread.

3. The dowel according to claim 2, **characterised in that** the at least one cutout (9) is designed oblong and extending in the axial direction of the guide sleeve and that the clamping key (6) is designed widening wedge-shaped in the direction of the wall body.

4. The dowel according to claim 3, **characterised in that** the clamping key (6) has two recesses (10) lying laterally opposite one another on its side facing the wall surface, into which recesses two corresponding noses (13) of the guide sleeve (5) arranged at the cutout (9) engage and support the clamping key (6) in a swivelling manner.

5. The dowel according to any one of claims 1 to 4, **characterised in that** the guide sleeve (5) is made from a thermoplastic plastics material, particularly preferably a glass-fibre reinforced polymer, and that the clamping key (6) is produced from plastics material or metal.

6. The dowel according to claim 5, **characterised in that** the polymer is selected from the group of polyamides and copolyamides and has a melting point of at least 250 °C.

7. The dowel according to claim 6, **characterised in that** the polymer is a partially aromatic, partially crystalline copolyamide with a melting point in the range from 300 to 350 °C.

8. The dowel according to any one of the preceding claims, **characterised in that** the clamping key (6) has a toothing system (11) on its side facing the inside of the guide sleeve, said toothing system corresponding to the internal thread (12) of the guide sleeve (5), so that, when a bolt (3) is screwed in, a direct keying is present between the bolt (3) and the swivelled-out clamping key (6).

9. The dowel according to any one of the preceding claims, **characterised in that** the guide sleeve (5) has at the edge facing the head of the screw (3) at least one nose which, in the inserted state, makes provision at the lateral surface for locking against rotation in the sleeved drill-hole (7) and at the end face indicates the position of the cutout (9).

## Revendications

1. Cheville, pour l'ancrage par friction et par complémentarité de forme d'éléments de construction (2), dans une paroi, un plafond ou un sol (1) qui est homogène dans la zone de la cheville et qui est notamment en béton, dans un alésage à douille (7) et au moins dans un alésage à clavette (8) qui est conçu en oblique par rapport à l'alésage à douille (7), en dérivation à l'intérieur du corps de la paroi, la cheville comprenant une douille conductrice (5) avec au moins une échancrure (9) dans la surface de l'enveloppe et au moins une clavette de serrage (6) disposée de façon mobile dans au moins l'échancrure (9) et la clavette de serrage étant articulée à l'arrière et conçue de façon telle, que lorsque la douille conductrice (5) est vide, elle ne saillisse pas par-dessus la surface de l'enveloppe de cette dernière et qu'après le vissage d'une vis (3) dans la douille conductrice (5), elle soit déviée en oblique, vers l'avant, hors de la surface de l'enveloppe par l'articulation (13), **caractérisée en ce qu'**après le vissage d'une vis, la surface interne de la clavette de serrage (6) s'étend en parallèle de la direction axiale de la douille conductrice (5).

2. Cheville selon la revendication 1, **caractérisée en ce que** la douille conductrice est conçue sous forme cylindrique et **en ce que** sur sa face interne, elle est munie d'un taraudage.

3. Cheville selon la revendication 2, **caractérisée en ce que** au moins l'échancrure (9) est conçue de forme oblongue et s'étendant en direction axiale et **en ce que** la clavette de serrage (6) est conçue de façon à s'évaser de façon cunéiforme en direction du corps de paroi.

4. Cheville selon la revendication 3, **caractérisée en ce que** sur sa face dirigée vers la surface de la paroi, la clavette de serrage (6) est munie de deux cavités (10) qui se font face, dans lesquelles s'accrochent deux tenons (13) correspondants de la douille conductrice (5), qui sont placés sur l'échancrure (9) et qui logent la clavette de serrage (6) de façon pivotante.

5. Cheville selon l'une quelconque des revendications 1 à 4, **caractérisée en ce que** la douille conductrice (5) est constituée d'une matière thermoplastique, notamment de préférence d'un polymère renforcé par fibres de verre et **en ce que** la clavette de serrage (6) est fabriquée en matière plastique ou en métal.

6. Cheville selon la revendication 5, **caractérisée en ce que** le polymère est choisi dans le groupe des polyamides et des co-polyamides et **en ce que** son point de fusion est d'au moins 250 °C.

7. Cheville selon la revendication 6, **caractérisée en ce que** le polymère est un co-polyamide partiellement aromatique, semi-cristallin avec un point de fusion dans la fourchette de 300 à 350 °C.

8. Cheville selon l'une quelconque des revendications précédentes, **caractérisée en ce que**, sur sa face dirigée vers la face interne de la douille conductrice, la clavette de serrage (6) est munie d'une denture (11) qui correspond au taraudage (12) de la douille conductrice (5), pour que lorsque que la vis (3) est serrée, on assiste à une complémentarité de forme entre la vis (3) et la clavette (6) déviée.

9. Cheville selon l'une quelconque des revendications précédentes, **caractérisée en ce que**, sur le bord dirigé vers la tête de la vis (3), la douille conductrice (5) est munie d'au moins un tenon, qui à l'état inséré, assure sur la surface de l'enveloppe un blocage contre la rotation dans l'alésage à douille (7) et qui sur la surface frontale indique la position de l'échancrure (9).
